# EUROPÄISCHE PATENTSCHRIFT

(11) **EP 4 484 816 B1**
(45) Veröffentlichungstag und Bekanntmachung des Hinweises auf die Patenterteilung: **05.08.2026**
(21) Anmeldenummer: 24182073.7
(22) Anmeldetag: 13.06.2024
(51) Int. Cl.: F16L 37/088

(54) **KUPPLUNGSBUCHSE MIT LEICHTGÄNGIGER DICHTUNG**
CLUTCH SOCKET WITH AN EASY RUNNING SEAL
DOUILLE D'EMBRAYAGE À JOINT D'ÉTANCHÉITÉ À BON PASSAGE

(30) Priorität: 30.06.2023 DE 102023117392; 20.09.2023 DE 102023125438
(43) Veröffentlichungstag der Anmeldung: 01.01.2025
(73) Patentinhaber: TI Automotive (Fuldabrück) GmbH, 34277 Fuldabrück (DE)
(72) Erfinder: Barthel, Iris, 34270 Schauenburg (DE); Häckel, Andre, 34513 Waldeck (DE); Knobloch, Harald, 69121 Heidelberg (DE); Röder, Michael, 34289 Zierenberg (DE); Rohde, Reiner, 34323 Malsfeld (DE); Bube, Kay, 36277 Schenklengsfeld (DE)
(74) Vertreter: Novagraaf Group

(56) Entgegenhaltungen:
- EP-A1- 3 431 852
- WO-A1-2023/052514
- DE-A1- 102007 060 094

## Beschreibung

Die Erfindung betrifft eine Kupplungsbuchse mit einem aus mehreren Teilen hergestellten Buchsenkörper sowie mit einer Dichtungsnut, die von einem rein rotatorischen Umlauf abweicht. Die Erfindung betrifft ferner ein Verfahren zur Herstellung dieser Kupplungsbuchse.

Eine derartige Kupplungsbuchse ist aus DE 20 2019 002 026 U1 bekannt, wobei das Kopfteil mit seiner einwärtigen Stirnwand die äußere Nutwand der Dichtungsnut der Kupplungsbuchse bildet. Somit kann das Kopfteil auch als Haltering betrachtet werden bzw. sind der Haltering und das Kopfteil integral miteinander verbunden. Die Form der Dichtungsnut ist im Längsschnitt der Kupplungsbuchse trapezförmig ausgebildet, wobei der radial äußere Nutgrund etwa breiter als die radial innere Nutöffnung ist. Das Kopfteil wird vollständig in das Dichtungsteil eingeschoben, so dass das Kopfteil gleichzeitig den Kupplungsstecker sowie den Rückhalter in sich aufnimmt. Das Kopfteil weist an seiner Außenseite Rastnasen auf, welche mit entsprechenden Ausnehmungen im Dichtungsteil korrespondieren und ein Einrasten des Kopfteils in dem Dichtungsteil gewährleisten.

In DE 20 2019 002 026 U1 ist ein Dichtungsring beschrieben, der - jedenfalls im in den Buchsenkörper eingesetzten Zustand - von einer rotationssymmetrischen Form bezogen auf die Mittelachse des Kupplungsabschnitts abweicht. Abhängig von der Umlaufposition weist dieser Dichtungsring Längsschnittflächen auf, deren Flächenmittelpunkt je nach Umlaufposition axial weiter auswärts oder axial weiter einwärts befindlich ist. Durch das Abweichen von der Rotationssymmetrie werden die aufzuwendenden, axial gerichteten Kräfte beim Einführen des Kupplungssteckers in die Kupplungsbuchse in einem gedachten Weg-Kraft-Diagramm vergleichmäßigt und damit die erforderliche Maximalkraft verringert. Das Abweichen von der Rotationssymmetrie des Dichtungsrings wie auch der Dichtungsnut äußert sich deutlich in einem Längsschnitt der Kupplungsbuchse. Im Ergebnis ist diese Kupplungsbuchse bzw. deren Dichtung beim Einführen des Kupplungssteckers relativ leichtgängig.

In EP 2 206 943 B1 ist eine Kupplungsbuchse beschrieben, deren Dichtungsnut rotationssymmetrisch ist. Das Kopfteil wird zwar in das Dichtungsteil eingeschoben und mit diesem verschweißt. Allerdings wird das Kopfteil nicht vollständig in das Dichtungsteil eingeschoben, so dass das Kopfteil von außen erkennbar ist und der Rückhalter nur von dem Kopfteil aufgenommen wird. Das Kopfteil bildet mit seiner axial einwärtigen Stirnwand zugleich den Haltering für den Dichtungsring. Das Kopfteil und das Dichtungsteil können aufgrund der Rotationssymmetrie der in Kontakt stehenden Stirnwände um die Mittelachse des Kupplungsabschnitts praktisch beliebig zueinander verdreht werden, wodurch eine wünschenswerte Flexibilität hinsichtlich der Geometrie der Kupplungsbuchse erreicht wird.

Demgegenüber ist im Falle von DE 20 2019 002 026 U1 ein beliebiges Verdrehen des Kopfteils relativ zu dem Dichtungsteil nicht möglich, was einerseits durch die Rastverbindung und andererseits durch das Abweichen von der Rotationssymmetrie der Dichtungsnut begründet wird.

Aufgabe der Erfindung ist es daher, eine Kupplungsbuchse zu schaffen, die einerseits eine große Flexibilität hinsichtlich der Drehung des Kopfteils relativ zum Dichtungsteil bietet und andererseits beim Einführen des Kupplungssteckers relativ leichtgängig ist.

Diese Aufgabe wird gelöst durch eine Kupplungsbuchse gemäß dem Anspruch 1.

Der Erfindung liegt zunächst die Erkenntnis zugrunde, dass die Lehre von DE 20 2019 002 026 U1 nicht mit der Lehre von EP 2 206 943 B1 vereinbar ist. So müssen die Stirnseiten des Kopfteils und des Dichtungsteils jeweils rotationssymmetrisch ausgebildet sein, damit das Kopfteil und das Dichtungsteil in praktisch jeder Rotationsposition zueinander passen. Gleichzeitig muss die Dichtungsnut von der Rotationssymmetrie abweichen, damit die erwähnte Vergleichmäßigung der aufzuwendenden axialen Kräfte beim Einführen des Kupplungssteckers in die Kupplungsbuchse herbeigeführt werden kann.

Der Erfindung liegt insbesondere die Erkenntnis zugrunde, dass die dem Dichtungsteile zugewandte Stirnseite des Kopfteils von der Dichtungsnut über den zusätzlichen Entkopplungsring zu entkoppeln ist, was entgegen der ausdrücklichen Lehre von DE 20 2019 002 026 U1 und EP 2 206 943 B1 ist. Denn hierdurch wird ein weiteres Teil in Form eines separat hergestellten Teils erforderlich, wodurch sich der Herstellungsaufwand erhöht. So bedarf es zum einen eines zusätzlichen Spritzgusswerkzeugs sowie auch eines zusätzlichen Herstellungsschritts in Form der Befestigung des Entkopplungsrings in dem Dichtungsteil. Wesentliche Erkenntnis der Erfinder ist es, diesen Mehraufwand in Kauf zu nehmen, obwohl der Automobilzulieferermarkt ausgesprochen preisempfindlich ist. Insbesondere wurde gefunden, dass über die Entkopplung der separate Entkopplungsring auf der axial auswärtigen Seite an das Kopfteil angepasst und damit rotationsymmetrisch gestaltet werden kann, während die axial einwärtige Seite des Entkopplungsrings an die Dichtungsnut angepasst werden kann.

Der Gedanke der Entkopplung des Kopfteils von dem Dichtungsteil über den zusätzlichen Entkopplungsring ist ein wesentlicher Bestandteil der Erfindung. Zwar ist ein zusätzlicher "Haltering" bereits aus EP 1 600 683 B1 bekannt. Doch der darin offenbarte Haltering dient dem Halten des Dichtungsrings während des Vorgangs der Umspritzung des Kopfteils. Insbesondere dient der Haltering dem Abschirmen des Dichtungsrings gegenüber der schmelzflüssigen Masse des Kopfteils während des Umspritzvorgangs. Gäbe es den Haltering nicht, so würde der Dichtungsring in der schmelzflüssigen Masse eingebettet und würde nach Erstarrung derselben die notwendige Elastizität in der erstarrten Masse verlieren. Der Haltering bzw. Abschirmring ergibt demnach vor allem einen Sinn im Falle einer Herstellung des Kopfteils per Umspritzung. Ohne Umspritzung könnte die Haltefunktion - wie bei den anderen vorbekannten Ausführungsformen auch - einfach in das Kopfteil integriert werden.

Weiter ist aus der WO 2023052514A1 ein Fluid-Kupplungselement mit einem weiblichen Anschluss, der einen axialen Durchgang und eine radiale Nut zur Aufnahme eines Dichtungsrings aufweist, sowie einem männlichen Anschluss, der eine komplementäre Einfüge-Form besitzt. Beim axialen Einführen des männlichen Anschlusses wird der Dichtungsring gegen die Nut gedrückt, wodurch eine dichte Verbindung zwischen den beiden Anschlussteilen entsteht.

Schließlich liegt der Erfindung die Erkenntnis zugrunde, dass die Entkopplung des Kopfteils die beste aller Lösungen zum Bereitstellen der beiden eingangs genannten Funktionen darstellt. Beispielsweise könnte der Dichtungsring im Längsschnitt gesehen eine größere axiale Ausdehnung aufweisen, wobei gleichzeitig der Dichtungsring in radialer Richtung weniger stark vom Kupplungsstecker komprimiert wird. Dann allerdings, so die Erkenntnis der Erfinder, treiben die geringeren Toleranzen den Aufwand noch stärker in die Höhe als der separate Entkopplungsring. Gemäß einer weiteren, verworfenen Beispiellösung könnten der Dichtungsring oder der Kupplungsstecker mit einer Gleitbeschichtung versehen werden. Im Falle des beschichteten Kupplungssteckers würde jedoch zu viel Aufwand an Dritte und vor allem an die Automobilhersteller verlagert werden. Vor allem müsste das Zusammenspiel von Kupplungsstecker und Kupplungsbuchse getestet werden, was die Mitarbeit des Kupplungsstecker-Zulieferers (meist Zulieferer eines Aggregats bzw. einer mit einer Fluidleitung verbundenen Komponente) und letztlich auch des Automobilherstellers erfordern würde. Im Falle der beschichteten Dichtungsringe steigen die Preise der Dichtungsringe um ein Vielfaches an, da es sich hierbei um Spezialanfertigungen handeln würde. Außerdem ist die Beschichtung aufgrund des gummiartigen Materials der Dichtungsringe und aufgrund des Fluidkontakts extrem anspruchsvoll und nur sehr eingeschränkt langzeitstabil. Im Ergebnis wurde gefunden, dass die eingangs genannte Aufgabe durch die erfindungsgemäße Lösung in besonders zufriedenstellender Weise gelöst wird.

Der Ausdruck "dessen vollständiger Umlauf im Längsschnitt der Kupplungsbuchse gesehen wenigstens abschnittsweise von einer Senkrechten zur Mittelachse abweicht" meint vorzugsweise ein Abweichen von der vollständigen Rotationssymmetrie dieses Punktes bezogen auf die Mittelachse. Der Ausdruck meint weiter vorzugsweise, dass der Umlauf des Punktes neben der Rotation in Umlaufrichtung auch durch eine zusätzliche axiale und/oder radiale Komponente beschrieben wird.

Der Begriff "integral" meint vorzugsweise, dass die Verbindung nicht nur einstückig ist (z. B. durch Schweißung), sondern darüber hinaus auch durch einen Guss bzw. Spritzguss mit nur einer Materialquelle erzeugt wird. Demgegenüber ist ein Zweikomponenten-Spritzguss - sofern ein Stoffschluss zwischen den beiden Komponenten stattfindet - keine integrale Verbindung, sondern eine einstückige Verbindung. Der Ausdruck "einstückige Verbindung" meint vorzugsweise, dass die beiden miteinander verbundenen Elemente mittels Stoffschluss (Schweißung oder Klebung) nur irreversibel bzw. zerstörend voneinander lösbar sind. Eine reversible Verbindung meint beispielsweise eine lösbare Rastverbindung oder eine Schraubverbindung. Eine Schweißverbindung mag eine einstückige, aber keine integrale Verbindung darstellen.

Die Richtungsangabe "axial einwärtig" oder "axial einwärts" meint vorzugsweise die axiale Richtung von dem Kupplungsabschnitt hin zu dem Verbindungsabschnitt. Die Richtungsangaben "axial auswärts" bzw. "axial auswärtig" meinen bevorzugt die axiale Richtung vom Verbindungsabschnitt hin zu dem Kupplungsabschnitt.

Gemäß einer bevorzugten Ausführungsform ist die innere Nutwand einstückig und vorzugsweise integral mit dem Dichtungsteil bzw. dem Verbindungsabschnitt bzw. dem Nutgrund bzw. dem wenigstens einen Winkelstellelement verbunden. Dies bewirkt eine vorteilhafte Stabilität des Dichtungsteils bzw. eine günstige Herstellung des Dichtungsteils.

Es ist sehr bevorzugt, dass der Entkopplungsring separat von dem Dichtungsteil hergestellt ist, so dass der Entkopplungsring mit dem Dichtungsteil nicht integral verbunden ist. Hierdurch werden eine Vorfixierung des Dichtungsrings sowie eine leichtere Einführbarkeit des Dichtungsrings bei der Herstellung der Kupplungsbuchse ermöglicht. Es ist möglich, dass der Entkopplungsring kraft- und/oder form- und/oder stoffschlüssig mit dem Dichtungsteil verbunden ist. Der Entkopplungsring kann beispielsweise mittels Presspassung und/oder mittels Einrasten und/oder einstückig und insbesondere mittels Schweißung - z. B. Laser- oder Rotationsschweißung - mit dem Dichtungsteil verbunden werden. Es ist möglich, dass der Entkopplungsring berührungsfrei zum Kopfteil in dem Buchsenkörper angeordnet ist. Gemäß einer Ausführungsform berührt der Entkopplungsring wenigstens ein komplementäres Winkelstellelement des Kopfteils.

Gemäß einer besonders bevorzugten Ausführungsform weicht - in einem Längsschnitt der Kupplungsbuchse gesehen - ein Punkt einer axial einwärtigen Rückseite des Entkopplungsrings entlang eines - insbesondere vollständigen - Umlaufs wenigstens abschnittsweise von einer Senkrechten zur Mittelachse ab. Dies ermöglicht eine Parallelisierung der äußeren Nutwand relativ zur inneren Nutwand, wodurch eine verhältnismäßig konstante Quetschung des Dichtungsrings erreicht wird. In der Folge ist der Kraftschluss zwischen dem komplementären Kupplungsstecker und dem Dichtungsring entlang eines Umlaufs sehr gleichmäßig ausgebildet, wodurch das Fluid praktisch keine Schwachstellen am Dichtungsring finden wird. Im Ergebnis wird dadurch eine besonders gute Abdichtung erzielt.

Es ist bevorzugt, dass die innere Nutwand und die äußere Nutwand in Umlaufrichtung wenigstens abschnittsweise und bevorzugt entlang eines vollständigen Umlaufs parallel zueinander ausgebildet sind. Vorzugsweise definieren in einem Längsschnitt der Kupplungsbuchse ein Punkt der äußeren Nutwand und ein Punkt der inneren Nutwand auf derselben radialen Höhe r einen Abstand A₀ zueinander, wobei der Abstand A(α) dieser beiden Punkte entlang eines vollständigen Umlaufs (Winkel α um Mittelachse) um nicht mehr als 90 % bzw. 70 % bzw. 50 % bzw. 30 % vor dem Abstand A₀ im Längsschnitt abweicht: |A₀ - A(α) | / A₀ < Δ = 0,9 bzw. 0,7 bzw. 0,5 bzw. 0,3.

Es ist von Vorteil, dass im Längsschnitt der Kupplungsbuchse ein Punkt der inneren Nutwand und/oder äußeren Nutwand bei einem vollständigen Umlauf eine Umlaufbahn beschreibt. Die Umlaufbahn des Punktes weist vorzugsweise wenigstens eine am weitesten axial einwärtige Stelle (axiales Minimum) und wenigstens eine am weitesten axial auswärtige Stelle (axiales Maximum) auf. Eine axiale Differenz D zwischen dem axialen Minimum und dem axialen Maximum ist vorzugsweise > 1/10 bzw. 1/8 bzw. 1/6 bzw. 1/4 der axialen Ausdehnung einer Querschnittsfläche des Dichtungsrings im Längsschnitt der Kupplungsbuchse im entspannten Zustand.

Gemäß einer besonders bevorzugten Ausführungsform umfasst die Umlaufbahn des Punktes der inneren Nutwand im Längsschnitt der Kupplungsbuchse entlang eines vollständigen Umlaufs zwei axiale Minima und zwei axiale Maxima. Vorzugsweise liegen sich die beiden axialen Maxima hinsichtlich der Mittelachse diametral gegenüber. Zweckmäßigerweise liegen sich die beiden Minima hinsichtlich der Mittelachse diametral gegenüber. Es ist bevorzugt, dass die axialen Maxima und Minima der Umlaufbahn zueinander äquidistant auf der Umlaufbahn angeordnet sind. Vorzugsweise variiert die axiale Position der Umlaufbahn - aufgetragen über den Umlaufwinkel - wellenförmig, wodurch die axialen Minima und Maxima gebildet werden. Die wenigstens zwei axialen Minima und Maxima bewirken eine besonders stabile Lagerung des Dichtungsrings in der Dichtungsnut während der Kupplungsstecker eingeführt wird.

Zweckmäßigerweise umfasst der Entkopplungsring und/oder das Kopfteil und/oder das Dichtungsteil einen Kunststoff. Hierdurch wird die Herstellung dieser Komponenten mittels Spritzguss ermöglicht, was eine günstige Herstellung im Vergleich zu Metallwaren bietet. Es ist bevorzugt, dass der Entkopplungsring und/oder das Kopfteil und/oder das Dichtungsteil wenigstens 30 bzw. 50 bzw. 70 bzw. 90 Gew.-%Kunststoff aufweisen. Der Entkopplungsring, das Kopfteil und das Dichtungsteil können denselben Kunststoff oder unterschiedliche Kunststoffe aufweisen.

Vorzugsweise steht der Entkopplungsring in Umlaufrichtung in einem Formschluss - insbesondere über eine Nut-Feder-Verbindung - mit dem Dichtungsteil. Dies ermöglicht eine definierte Ausrichtung des Entkopplungsrings in Umlaufrichtung relativ zur inneren Nutwand bzw. zum Dichtungsteil. Es ist bevorzugt, dass der Entkopplungsring ein Winkelfestlegungselement umfasst. Es ist vorteilhaft, dass das Dichtungsteil ein komplementäres Winkelfestlegungselement aufweist. Zweckmäßigerweise ist das komplementäre Winkelfestlegungselement komplementär zum Winkelfestlegungselement ausgebildet. Vorzugsweise bilden das Winkelfestlegungselement und das komplementäre Winkelfestlegungselement eine Nut-Feder-Verbindung. Gemäß einer Ausführungsform ist das Winkelfestlegungselement als Nut ausgebildet, in welche das komplementäre Winkelfestlegungselement in Form eines Vorsprungs eingreift.

Erfindungsgemäß ist die Kupplungsbuchse so ausgebildet, dass das Kopfteil relativ zum Dichtungsteil - bevor eine reversible oder irreversible Befestigung miteinander stattfindet - um die Mittelachse drehbar ist, so dass eine Mehrzahl an möglichen Winkelstellungen zwischen dem Kopfteil und dem Dichtungsteil vorgesehen ist. Dies ermöglicht eine größere Flexibilität in der Herstellung bei ausreichend Freiheitsgraden in der Wahl der Winkelstellung. Beispielsweise kann ein im Längsschnitt gewinkeltes Dichtungsteil in verschiedenen Winkelstellungen in Umlaufrichtung mit dem Kopfteil zusammengesetzt werden, wodurch entsprechend viele unterschiedliche Kupplungsbuchsen entstehen. Für diese unterschiedlichen Kupplungsbuchsen bedürfte es - im Falle eines integralen Kupplungskörpers - jedes Mal eines kostspieligen Spritzgusswerkzeugs. Aufgrund der separaten Herstellung von Kopfteil und Dichtungsteil werden jedoch nur zwei Spritzgusswerkzeuge benötigt, wobei allerdings eine Vielzahl an unterschiedlichen Kupplungsbuchsen mithilfe des Baukastenprinzips möglich sind. Insbesondere ist es auch möglich, das Kopfteil mit unterschiedlichen Dichtungsteilen zu kombinieren. Das Kopfteil kann beispielsweise auch mit Dichtungsteilen kombiniert werden, die nur um 45° oder gar nicht gewinkelt sind.

Es ist von Vorteil, wenn lediglich eine definierte bzw. begrenzte bzw. diskrete Anzahl an Winkelstellungen vorgesehen ist. Erfindungsgemäß umfasst die Kupplungsbuchse wenigstens 2 bzw. 3 bzw. 4 bzw. 5 bzw. 6 bzw. 8 bzw. 10 bzw. 12 bzw. 15 definierte Winkelstellungen. Es ist besonders bevorzugt, dass die Winkelstellungen äquidistante Winkeldifferenzen in der Umlaufrichtung darstellen. Vorteilhafterweise ist die Kupplungsbuchse so ausgebildet, dass die Winkelstellungen über ein/das Winkelstellelement und/oder ein/das komplementäre Winkelstellelement herstellbar sind.

Erfindungsgemäß umfasst das Dichtungsteil wenigstens ein Winkelstellelement zur Einstellung einer Winkelstellung in Umlaufrichtung zwischen dem Dichtungsteil und dem Kopfteil, wobei das Kopfteil wenigstens ein zum Winkelstellelement komplementäres Winkelstellelement aufweist. Es ist bevorzugt, dass das wenigstens eine Winkelstellelement eine Zahnform und vorzugsweise eine in Umlaufrichtung benachbarte Ausnehmung umfasst. Vorzugsweise weist das komplementäre Winkelstellelement eine Ausnehmungsform und vorzugweise einen in Umlaufrichtung benachbarten Zahn auf. Vorzugsweise erstreckt sich das Winkelstellelement über höchstens 180° bzw. 120° bzw. 90° bzw. 72° bzw. 60° bzw. 45° bzw. 36° bzw. 30° in Umlaufrichtung. Zweckmäßigerweise definiert die Zahl der Winkelstellelemente bzw. komplementären Winkelstellelemente die Zahl der definierten Winkelstellungen bzw. die Ausdehnung eines Winkelstellelements bzw. komplementären Winkelstellelements in Umlaufrichtung. Es ist sehr bevorzugt, dass das Dichtungsteil eine Mehrzahl an Winkelstelleelementen aufweist.

Zweckmäßigerweise umfasst das Kopfteil eine Mehrzahl an komplementären Winkelstelleelementen. Es ist bevorzugt, dass die Zahl der Winkelstellelemente der Zahl der komplementären Winkelstellelemente entspricht. Vorteilhafterweise sind die Winkelstellelemente zueinander identisch ausgebildet. Es ist bevorzugt, dass die komplementären Winkelstellelemente zueinander identisch ausgebildet sind.

Vorzugsweise umfasst der Entkopplungsring eine Einführfläche, deren Kontur - in einem Längsschnitt von der Kupplungsbuchse gesehen - wenigstens eine axiale und eine radiale Komponente umfasst. Hierdurch wird eine bessere Einführung des komplementären Kupplungssteckers ermöglicht. Die Einführfläche ist vorzugsweise vollständig umlaufend ausgebildet. Es ist von Vorteil, dass die Einführfläche in axial einwärtiger Richtung eine sich verjüngende Öffnung definiert. Die Einführfläche kann konisch ausgebildet sein.

Es ist von Vorteil, dass der Nutgrund und/oder die innere Nutwand und/oder die äußere Nutwand in einem Längsschnitt der Kupplungsbuchse gesehen wenigstens abschnittsweise eine gebogene Kontur aufweist/aufweisen. Dies ermöglicht eine sicherere Aufnahme des Dichtungsrings. Es ist bevorzugt, dass die gebogene Kontur der inneren Nutwand im Längsschnitt gesehen eine nach axial einwärts gerichtete Ausbuchtung umfasst. Es ist möglich, dass die äußere Nutwand eine gerade Kontur bzw. eine sich lediglich in radialer Richtung erschreckende Kontur umfasst. Es ist möglich, dass der Nutgrund im Längsschnitt der Kupplungsbuchse gesehen eine sich lediglich in axialer Richtung erstreckende Kontur aufweist.

Mit Vorteil umfasst die Kupplungsbuchse ein Anzeigeelement zur Anzeige einer Position des Kupplungssteckers innerhalb der Kupplungsbuchse. Dies bietet eine größere Montagesicherheit. Es ist möglich, dass die Kupplungsbuchse so ausgebildet ist, dass das Anzeigeelement anzeigt, dass der Kupplungsstecker vollständig in die Kupplungsbuchse eingeführt wurde. Gemäß einer Ausführungsform ist die Kupplungsbuchse so ausgebildet ist, dass das Anzeigeelement anzeigt, dass der Kupplungsstecker nicht vollständig in die Kupplungsbuchse eingeführt wurde. Das Anzeigeelement kann ein optisches und/oder haptisches und/oder elektrisches bzw. elektronisches Anzeigesignal darstellen. Das Anzeigeelement kann beispielsweise als QR-Code und/oder als ein aus dem Kupplungskörper hervorstehendes Element und/oder als ein Funksignal gestaltet sein. Es ist bevorzugt, dass das Anzeigeelement unmittelbar oder mittelbar mit dem Kupplungsstecker in Kontakt kommt. Es ist möglich, dass ein Schiebeelement auf einer Außenseite des Kupplungskörpers nur in einem vollständig eingeführten Zustand des Kupplungssteckers in axialer Richtung verschoben werden kann, so dass ein optischer Code, beispielsweise ein QR-Code oder ein Strichcode, für den Nutzer sichtbar wird. Es ist möglich, dass der Rückhalter einen Indikator bzw. ein Indikatorelement aufweist, so dass der Rückhalter nur bei einem vollständig eingeführten Kupplungsstecker in den Kupplungskörper einführbar ist, wodurch ein optisches und haptisches Signal erzeugt wird. Es ist möglich, dass im Falle eines nicht eingeführten Kupplungssteckers ein Stromkreis offen bleibt oder geschlossen wird, so dass ein Chip ein entsprechendes Funksignal abgibt.

Es ist von Vorteil, dass die Kupplungsbuchse so ausgebildet ist, dass das Kopfteil und das Dichtungsteil beim Zusammenführen in axialer Richtung einen zunehmenden Formschluss in Umlaufrichtung eingehen. Hierdurch wird ein sicherer Sitz beim Zusammenfügen des Kopfteils und des Dichtungsteils ermöglicht und gleichzeitig eine definierte Position in Umlaufrichtung von Kopfteil und Dichtungsteil zueinander gewährleistet. Außerdem wird hierdurch eine Haptik erzeugt, die dem Nutzer signalisiert, dass die zusammengefügten Teile in einer beabsichtigten Weise zusammengefügt wurden.

Vorteilhafterweise greift das Winkelstellelement beim Zusammenführen des Kopfteils und des Dichtungsteils in axialer Richtung in das komplementäre Winkelstellelement ein. Es ist sehr bevorzugt, dass das Winkelstellelement und das komplementäre Winkelstellelement beim Zusammenführen des Kopfteils und des Dichtungsteils in axialer und/oder in Umlaufrichtung einen Formschluss eingehen, so dass bei einem Anschlag des Kopfteils und des Dichtungsteils in axialer Richtung zugleich auch eine Bewegung in Umlaufrichtung zwischen dem Kopfteil und dem Dichtungsteil nicht mehr möglich ist. Es ist bevorzugt, dass sich das wenigstens eine Winkelstellelement des Dichtungsteils in axial auswärtiger Richtung im Hinblick auf die Ausdehnung in Umlaufrichtung verjüngt oder erweitert. Vorzugsweise bilden das wenigstens eine Winkelstellelement und das wenigstens eine komplementäre Winkelstellelement eine Nut-Feder-Verbindung, wobei die Nut dieser Nut-Feder-Verbindung sich zu dem Nutgrund hin verjüngt.

Es ist möglich, dass der Rückhalter als Drahtbügel oder als Spritzgussteil ausgebildet ist. Hierdurch werden geeignete Rückhalter bereitgestellt. Es ist möglich, dass der Rückhalter im Wesentlichen U-förmig oder vollständig umlaufend ausgebildet ist. Vorzugsweise ist der als Drahtbügel ausgebildete Rückhalter U-förmig gestaltet und weist zwei U-Schenkel sowie eine U-Basis auf. Es ist von Vorteil, dass der Rückhalter separat zum Buchsenkörper bzw. Kopfteil bzw. Dichtungsteil ausgebildet ist. Vorzugsweise ist der Rückhalter in dem Buchsenkörper bzw. Kopfteil beweglich gelagert. Zweckmäßigerweise definiert der Rückhalter eine Einschubrichtung, entlang welcher der Rückhalter in den Buchsenkörper bzw. das Kopfteil eingeschoben wird.

Die eingangs genannte Aufgabe wird durch eine Fluidleitung gelöst, wobei die Fluidleitung eine erfindungsgemäße Kupplungsbuchse und ein Rohr umfasst. Hierdurch wird die fluidtechnische Komplexität auf die Fluidleitung verlagert, so dass der Kupplungsstecker deutlich einfacher gestaltet werden kann. In der Folge können die Aggregate mit einfachen Kupplungssteckern ausgestattet werden, wodurch eine klare Aufgabentrennung zwischen den verschiedenen Zulieferern gewährleistet wird. Es bevorzugt, dass das Rohr und/oder der Kupplungskörper wenigstens 30 bzw. 50 bzw. 70 bzw. 90 Gew.-% Kunststoff aufweisen. Vorzugsweise ist der Verbindungsabschnitt des Kupplungskörpers als Steckabschnitt ausgebildet. Es ist möglich, dass das Rohr auf den Verbindungsabschnitt aufgesteckt oder in den Verbindungsabschnitt eingesteckt wird bzw. ist. Die Verbindung des Rohrs mit dem Verbindungsabschnitt ist vorzugsweise kraft-, und/oder form- und/oder stoffschlüssig ausgebildet. Beispielsweise kann das Rohr mittels Presspassung auf den Verbindungsabschnitt aufgesteckt werden, wodurch eine kraft- und formschlüssige Verbindung entsteht. Auch ist es möglich, das Rohr in eine Aufnahme des Verbindungsabschnitts einzustecken, um in einem zweiten Schritt eine stoffschlüssige Verbindung herzustellen. Die stoffschlüssige Verbindung kann insbesondere mittels Schweißen und vorzugsweise mittels Laserschweißen hergestellt werden.

Die eingangs genannte Aufgabe wird gelöst durch ein Verfahren zur Herstellung einer erfindungsgemäßen Kupplungsbuchse, wobei der Entkopplungsring an dem Dichtungsteil befestigt wird, wobei vorzugsweise danach das Kopfteil an dem Dichtungsteil befestigt wird. Vorzugsweise wird vor der Befestigung des Entkopplungsrings an dem Dichtungsteil der Dichtungsring in dem Dichtungsteil platziert.

Nachfolgend wird die Erfindung anhand von fünf Figuren eines Ausführungsbeispiels näher erläutert. Es zeigen in schematischer Darstellung
- Fig. 1: eine Explosionsansicht einer erfindungsgemäßen Kupplungsbuchse,
- Fig. 2: einen Längsschnitt durch die Kupplungsbuchse aus Fig. 1 im zusammen gesetzten Zustand,
- Fig. 3: eine perspektivische Ansicht eines erfindungsgemäßen Entkopplungsrings der Kupplungsbuchse aus den Fig. 1 und 2,
- Fig. 4: ein Dichtungsteil der Kupplungsbuchse der Fig. 1 und 2 im Längsschnitt und
- Fig. 5: eine perspektivische Ansicht eines Kopfteils der Kupplungsbuchse der Fig. 1 und 2.

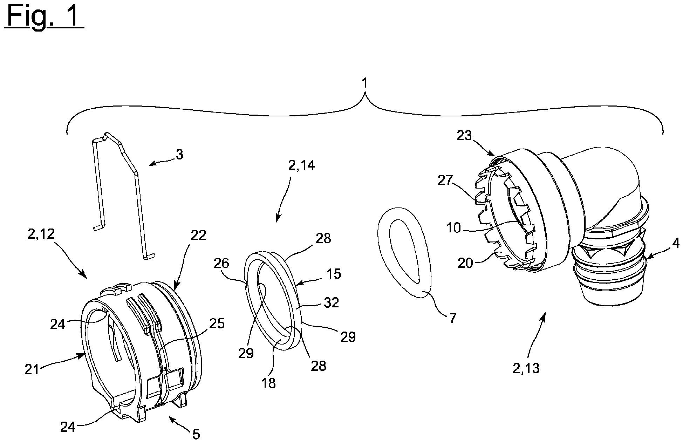

Gemäß Fig. 1 umfasst die Kupplungsbuchse 1 einen Buchsenkörper 2 sowie einen Rückhalter 3 und einen Dichtungsring 7. Der Rückhalter 3 dieses Ausgangsbeispiels ist vorzugsweise VDA-konform und kann als U-förmiger Drahtbügel mit einer U-Basis und zwei U-Schenkeln ausgestaltet sein. Der Dichtungsring 7 umfasst vorzugsweise ein Elastomer zur kraftschlüssigen Abdichtung der Kupplungsbuchse 1 gegenüber einem hier nicht dargestellten komplementären Kupplungsstecker.

Der Kupplungsstecker mag eine Nut oder eine Schulter auf seiner Außenseite aufweisen, durch welche der Kupplungsstecker am Rückhalter 3 in bekannter Weise innerhalb der Kupplungsbuchse 1 einrasten kann. Es ist bevorzugt, dass der Rückhalter 3 und/oder der Dichtungsring 7 reversibel aus der Kupplungsbuchse 1 entnehmbar sind. Der Begriff "reversibel" meint vorzugsweise ein zerstörungsfreies Entnehmen.

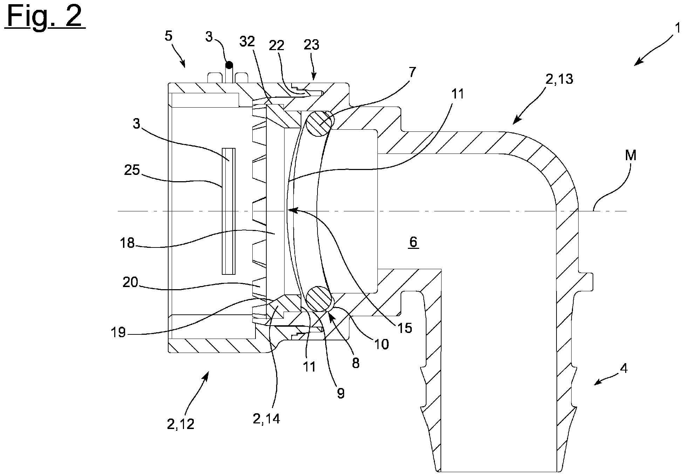

Der Buchsenkörper 2 weist mit Blick auf die Figuren 1 und 2 ein Kopfteil 12, einen Entkopplungsring 14 sowie ein Dichtungsteil 13 auf. In diesem Ausführungsbeispiel wird vorzugsweise zunächst der Dichtungsring 7 in das Dichtungsteil 13 eingesetzt, woraufhin dann zweckmäßigerweise der Entkopplungsring 14 zwecks Vorfixierung des Dichtungsrings 7 und zwecks nachfolgend noch genauer beschriebener Entkopplung in das Dichtungsteil 13 eingesetzt wird.

Es ist bevorzugt, dass nach der Befestigung des Entkopplungsrings 14 am Dichtungsteil 13 das Kopfteil 12 mit dem Dichtungsteil 13 verbunden wird. Vorzugsweise umfasst das Kopfteil 12 einen Kontaktabschnitt 22 zur Kontaktierung des Dichtungsteils 13. Mit Vorteil weist das Dichtungsteil 13 einen Kontaktabschnitt 23 zur Kontaktierung des Kopfteils 12 auf. In diesem Ausführungsbeispiel werden der Kontaktabschnitt 22 des Kopfteils 12 und der Kontaktabschnitt 23 des Dichtungsteils 13 miteinander verschweißt und insbesondere mittels Laserschweißung miteinander verbunden.

Vorzugsweise sind das Kopfteil 12, der Entkopplungsring 14 und/oder das Dichtungsteil 13 jeweils aus Kunststoff, insbesondere mittels Spritzguss, hergestellt. Erfindungsgemäß sind das Kopfteil 12, der Entkopplungsring 14 sowie das Dichtungsteil 13 separat voneinander hergestellt. In diesem Ausführungsbeispiel bilden das Kopfteil 12, der Entkopplungsring 14 sowie das Dichtungsteil 13 aufgrund der beiden Schweißungen einen einstückigen Buchsenkörper 2.

In diesem Ausführungsbeispiel wird der Entkopplungsring 14 mittels umlaufender - vorzugsweise vollständig umlaufender - Schweißverbindung auf einer radialen Außenseite 32 des Entkopplungsrings 14 am Dichtungsteil 13 bzw. innerhalb des Dichtungsteils 13 befestigt. Die Kupplungsbuchse 1 bzw. der Buchsenkörper 2 umfasst zweckmäßigerweise eine Stirnwand 21, welche dem Kopfteil 12 zugeordnet und einem einzuführenden Kupplungsstecker zugewandt ist.

Vorteilhafterweise umfasst der Entkopplungsring 14 ein Winkelfestlegungselement 26, welches mit einem komplementären Winkelfestlegungselement 27 des Dichtungsteils 13 korrespondiert. In diesem Ausführungsbeispiel ist das Winkelfestlegungselement 26 als Nut auf der radialen Außenseite 32 des Entkopplungsrings 14 ausgebildet. Zweckmäßigerweise ist das komplementäre Winkelfestlegungselement 27 als eine zum Winkelfestlegungselement 26 komplementäre Feder ausgebildet. Vorzugsweise umfasst der Entkopplungsring eine Einführfläche 18, welche mit Vorteil auf der Vorderseite bzw. axial auswärtigen Seite des Entkopplungsrings 14 angeordnet ist. Die Einführfläche 18 verjüngt sich in einem Längsschnitt der Kupplungsbuchse 1 in axial einwärtiger Richtung und kann beispielsweise eine konische Form aufweisen, die sich im Längsschnitt nach Figur 2 in einer schrägen Kontur 19 äußert.

Eine Rückseite 15 des Entkopplungsrings 14 weist bevorzugt und gemäß Figur 2 zwei in axialer Richtung ausgedehnte einwärtige Abschnitte 28 sowie zweckmäßigerweise zwei axial auswärtige Abschnitte 29 auf. Hierdurch erstreckt sich der Dichtungsring 7 im eingesetzten Zustand über mehrere, senkrecht zur Mittelachse M sich erstreckende Ebenen. In der Folge werden die axial aufzubringenden Kräfte beim Einführen des Kupplungssteckers in einem Kraft-Weg-Diagramm vergleich mäßigt bzw. im Sinne eines "flatten the curve" in die Länge gezogen, so dass das Einführen des Kupplungssteckers insgesamt leichtgängiger ist.

Das Kopfteil 12 mag in bekannter Weise eine Rückhalteraufnahme 25 aufweisen, welche ausweislich der Figuren 1 und 2 insbesondere die U-Schenkel des Rückhalters 3 in sich aufnehmen kann. Erfindungsgemäß umfasst das Kopfteil 12 wenigstens einen Teil eines Kupplungsabschnitts 5. Der Kupplungsabschnitt 5 mag insbesondere durch die maximale axiale Erstreckung des Kupplungssteckers innerhalb der Kupplungsbuchse 1 definiert sein und kann sich - wie im Ausführungsbeispiel nach Figur 2 erahnt werden kann - auch bis in das Dichtungsteil 13 erstrecken.

Es ist möglich, dass das Kopfteil 12 bzw. der Buchsenkörper 2 eine Verdrehsicherung 24 umfasst, welche ein Verdrehen des Kupplungssteckers in dem Buchsenkörper 2 verhindert. Die Verdrehsicherung 24 mag mindestens eine Nut oder eine Feder umfassen und kann gemäß Figur 1 insbesondere zwei Nuten aufweisen.

Erfindungsgemäß umfasst das Dichtungsteil 13 einen Verbindungsabschnitt 4 zur Verbindung mit einem Rohr oder einem Aggregat. Der Verbindungabschnitt 4 mag zur noch anstehenden Verbindung mit einem Rohr oder einem Aggregat ausgebildet sein, kann aber auch bereits eine Verbindung mit einem Rohr oder Aggregat eingegangen sein. Der Verbindungsabschnitt 4 kann zum Auf- oder Einstecken ausgebildet sein und mag einen Stoffschluss, einen Kraftschluss und/oder einen Formschluss umfassen. Im vorliegenden Ausführungsbeispiel ist der Verbindungsabschnitt 4 mit Widerhaken bzw. Rippen auf der Außenseite ausgebildet, um ein darauf aufgestecktes Rohr oder ein darauf aufgestecktes Aggregat (beides nicht abgebildet) sicher zu befestigen. Der Verbindungsabschnitt 4 und der Kupplungsabschnitt 5 werden zweckmäßigerweise über einen Fluidkanal 6 des Buchsenkörpers 2 fluidisch miteinander verbunden.

In diesem Ausführungsbeispiel ist die Kupplungsbuchse 1 gemäß der Fig. 1 und 2 gewinkelt ausgestaltet, so dass eine Mittelachse M des Kupplungsabschnitts 5 von einer in den Figuren nicht dargestellten Mittenachse des Verbindungsabschnitts 4 im Längsschnitt der Kupplungsbuchse 1 abweicht. Insbesondere können die Mittelachse M und die Mittenachse zueinander einen - beispielsweise - rechten Winkel bilden. Die Abwinkelung ist vorzugsweise in dem Dichtungsteil 13 realisiert, so dass das Kopfteil 12 mit einer Vielzahl an unterschiedlichen Dichtungsteilen 13 mit jeweils unterschiedlichen Abwinkelungen verbunden werden kann.

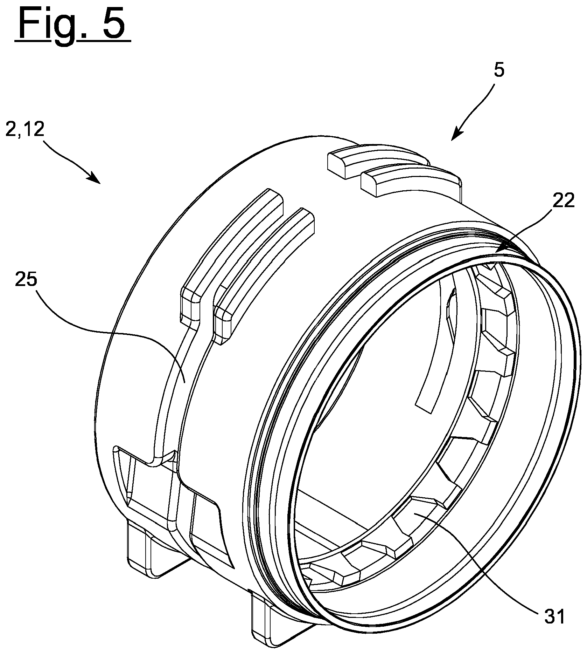

Erfindungsgemäß umfasst das Dichtungsteil 13 gemäß der Fig. 1 und 2 wenigstens ein Winkelstellelement 20. Das Kopfteil 12 umfasst wenigstens ein komplementäres Winkelstellelement 31, s. Fig. 5. Zweckmäßigerweise umfasst das Dichtungsteil 13 und/oder das Kopfteil 12 eine Mehrzahl an Winkelstellelementen 20 bzw. an komplementären Winkelstellelementen 31. Es ist bevorzugt, dass bei einem Zusammenführen des Kopfteils 12 und des Dichtungsteils 13 die Winkelstellelemente 20 bzw. die komplementären Winkelstellelemente 31 sich miteinander verzahnen bzw. miteinander kämmen. Erfindungsgemäß ist, dass durch das wenigstens eine Winkelstellelement 20 bzw. das wenigstens eine komplementäre Winkelstellelement 31 das Kopfteil 12 und das Dichtungsteil 13 in einer Mehrzahl an Rotationspositionen um die Mittelache M herum miteinander verbindbar sind, so dass der Verbindungsabschnitt 4 relativ zu dem Kopfteil 12 bzw. Rückhalter 3 mehrere Winkelstellungen einnehmen kann. Im vorliegenden Ausführungsbeispiel umfasst das Dichtungsteil 13 sechzehn Winkelstellelemente 20 und das Kopfteil 12 sechzehn komplementäre Winkelstellelemente 31, so dass das Dichtungsteil 13 und das Kopfteil 12 zueinander in 22,5°-Schritten zueinander befestigt werden können.

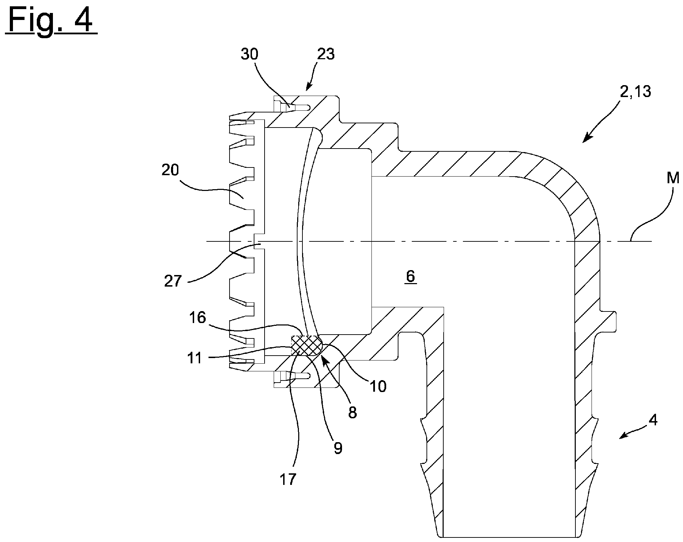

Ausweislich Fig. 4 umfasst der Kontaktabschnitt 23 des Dichtungsteils 13 eine Kopfteilaufnahme 30, in welche der Kontaktabschnitt 22 des Kopfteils 12 eingreift, vgl. Fig. 2. In diesem Ausführungsbeispiel sind die beiden Kontaktabschnitte 22, 23 miteinander stoffschlüssig verbunden, was beispielsweise mittels Laserschweißung durchgeführt wird.

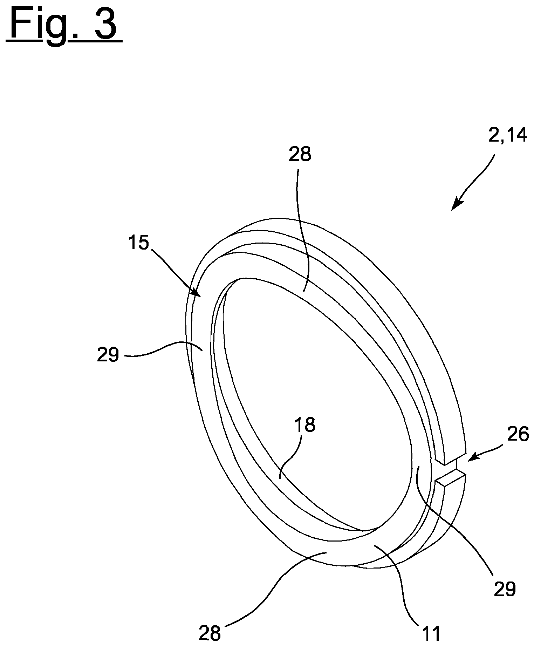

Insbesondere der Fig. 2 ist zu entnehmen, dass der Entkopplungsring 14 eine axial einwärts gewandte Rückseite 15 aufweist, welche im Längsschnitt der Fig. 2 keine Senkrechte bzw. keine Abfolge von mehreren Senkrechten bildet. Vorzugsweise ist die Kontur der Rückseite 15 im Längsschnitt gemäß Fig. 2 gebogen ausgestaltet. Die Rückseite 15 des Entkopplungsrings 14 ist außerdem noch in den Fig. 1 und 3 gut zu erkennen. Somit umfasst die Rückseite 15 des Entkopplungsrings 14 in diesem Ausführungsbeispiel ein kontinuierliches Band, welches im zusammen gesetzten Zustand der Kupplungsbuchse 1 eine äußere Nutwand 11 bildet, s. Fig. 3. In Fig. 2 ist ersichtlich, dass die Rückseite 15 in einem radialen, oberen Bereich sowie in einem radialen, unteren Bereich am stärksten in axial einwärtiger Richtung ausgedehnt ist. Demgegenüber ist die Rückseite 15 des Entkopplungsrings 14 im Längsschnitt nach Fig. 2 in den beiden radial mittleren Bereichen am wenigsten in axial einwärtiger Richtung ausgedehnt.

Vor allem in Fig. 2 ist erkennbar, dass die Kupplungsbuchse eine Dichtungsnut 8 umfasst, in welcher der Dichtungsring 7 angeordnet ist. Die Dichtungsnut 8 umfasst einen radial äußeren Nutgrund 9 sowie eine axial innere Nutwand 10 und die bereits erwähnte axial äußere Nutwand 11. Erfindungsgemäß bildet wenigstens ein Teil der Rückseite 15 des Entkopplungsrings 14 wenigstens einen Teil der äußeren Nutwand 11.

Die innere Nutwand 10 ist in Fig. 4 besser erkennbar, weil hier der Dichtungsring 7 zwecks besserer Darstellbarkeit der Dichtungsnut 8 weggelassen wurde. Vorzugsweise und im Ausführungsbeispiel weist die innere Nutwand 10 in einem Längsschnitt des Dichtungsteils 13 in Fig. 4 in radialer Richtung - entlang des gesamten Längsschnitts des Dichtungsteils 13 - eine gebogene Form auf. In der Fig. 4 ist zudem der Entkopplungsring 14 zwecks besserer Darstellung der übrigen Bestandteile der Dichtungsnut 8 weggelassen worden. Demgegenüber wurde die äußere Nutwand 11 mittels einer Strichlinie angedeutet. Vorzugsweise definieren die innere Nutwand 10 und die äußere Nutwand 11 in einem Längsschnitt der Kupplungsbuchse 1 bzw. des Dichtungsteils 13 eine Nutöffnung 16, welche ebenfalls über eine Strichlinie skizziert wurde. Zweckmäßigerweise definieren die innere Nutwand 10, die äußere Nutwand 11, der Nutgrund 9 und die Nutöffnung 16 eine - hier schraffiert dargestellte - Längsschnittfläche 17 der Dichtungsnut 8. Der Längsschnittfläche 17 mag ein Flächenmittelpunkt zugeordnet werden. Der Flächenmittelpunkt der Längsschnittfläche 17 weicht in diesem Ausführungsbeispiel entlang eines Umlaufs um die Mittelachse M herum im Längsschnitt der Kupplungsbuchse gesehen von einer Senkrechten zur Mittelachse M ab.

Der Fig. 2 und mehr noch der Fig. 4 ist zu entnehmen, dass ein beliebiger Punkt der Kontur der inneren Nutwand 10 entlang eines vollständigen Umlaufes um die Mittelachse M in diesem Ausführungsbeispiel nicht in einer Ebene senkrecht zur Mittelachse M verbleibt. Stattdessen ist die innere Nutwand 10 vorzugsweise parallel zu der äußeren Nutwand 11, so dass ein beliebiger Punkt der Kontur der inneren Nutwand 10 während eines vollständigen Umlaufes parallel zum Umlauf eines beliebigen anderen Punkts der äußeren Nutwand 11 ist. Insbesondere sind in Fig. 4 die radial äußeren Bereiche der inneren Nutwand 10 axial weiter einwärts angeordnet, während die beiden radial und damit näher an der Mittelachse M liegenden Bereiche im Längsschnitt gemäß Fig. 4 axial weiter auswärts angeordnet sind.

Demgegenüber weicht die Vorderseite bzw. axial auswärtige Seite des Entkopplungsrings 14 bevorzugt nicht von einer rotationssymmetrischen Ausgestaltung ab. Damit erlaubt der Entkopplungsring 14 eine Entkopplung des Kopfteils 12 von dem Dichtungsteil 13 bzw. von der Dichtungsnut 8. In der Folge wird anderem hierdurch eine Kompatibilität mit dem Kopfteil 12 stets gewährleistet.

Der Dichtungsring 7 mag eine Torusform aufweisen und insbesondere ein idealer Rotationstorus sein. Wird der Dichtungsring 7 in die Dichtungsnut 8 eingesetzt und durch den Entkopplungsring 14 vorfixiert, so nimmt der Dichtungsring 7 - zweckmäßigerweise ohne seine Längsschnittfläche zu verändern - etwa den Verlauf der Dichtungsnut 8 an. Dies ist am besten in Fig. 2 ersichtlich.

### Bezugszeichenliste

- 1: Kupplungsbuchse
- 2: Buchsenkörper
- 3: Rückhalter
- 4: Verbindungsabschnitt von 2
- 5: Kupplungsabschnitt von 2
- 6: Fluidkanal von 2
- 7: Dichtungsring
- 8: Dichtungsnut von 2
- 9: Nutgrund von 8
- 10: innere Nutwand von 8
- 11: äußere Nutwand von 8
- 12: Kopfteil
- 13: Dichtungsteil
- 14: Entkopplungsring
- 15: Rückseite von 14
- 16: Nutöffnung von 8
- 17: Längsschnittfläche von 8
- 18: Einführfläche von 14
- 19: Kontur von 18
- 20: Winkelstellelement von 13
- 21: Stirnwand von 1, 2, 12
- 22: Kontaktabschnitt von 12
- 23: Kontaktabschnitt von 13
- 24: Verdrehsicherung von 1 für Kupplungsstecker
- 25: Rückhalteraufnahme
- 26: Winkelfestlegungselement von 14
- 27: komplementäres Winkelfestlegungselement von 13
- 28: einwärtiger Abschnitt von 15
- 29: auswärtiger Abschnitt von 15
- 30: Kopfteilaufnahme von 13, 23
- 31: Komplementäres Winkelstellelement von 12
- 32: radiale Außenseite von 14
- M: Mittelachse

## Patentansprüche

1. Kupplungsbuchse (1), umfassend einen Buchsenkörper (2) und einen Rückhalter (3), wobei der Buchsenkörper (2) einen Verbindungsabschnitt (4) und einen Kupplungsabschnitt (5) umfasst, wobei der Rückhalter (3) in dem Kupplungsabschnitt (5) angeordnet ist, wobei der Kupplungsabschnitt (5) ausgebildet ist, einen komplementären Kupplungsstecker in sich aufzunehmen, wobei der Verbindungsabschnitt (4) mit einem Rohr oder einem Aggregat verbindbar oder verbunden ist, wobei ein Fluidkanal (6) des Buchsenkörpers (2) den Kupplungsabschnitt (5) und den Verbindungsabschnitt (4) fluidisch miteinander verbindet, wobei eine Mittelachse (M) des Kupplungsabschnitts (5) eine axiale, eine radiale und eine Umfangsrichtung des Kupplungsabschnitts (5) definiert,
wobei die Kupplungsbuchse (1) wenigstens einen Dichtungsring (7) umfasst, wobei die Kupplungsbuchse (1) eine Dichtungsnut (8) aufweist, wobei der Dichtungsring (7) in der Dichtungsnut (8) angeordnet ist, wobei die Dichtungsnut (8) einen Nutgrund (9) und in axialer Richtung eine innere Nutwand (10) sowie eine äußere Nutwand (11) umfasst, wobei - in einem Längsschnitt der Kupplungsbuchse (1) gesehen - die innere Nutwand (10) und/oder die äußere Nutwand (11) wenigstens einen Punkt aufweist bzw. jeweils wenigstens einen Punkt aufweisen, dessen vollständiger Umlauf im Längsschnitt der Kupplungsbuchse (1) gesehen wenigstens abschnittsweise von einer Senkrechten zur Mittelachse (M) abweicht,
wobei der Buchsenkörper (2) ein Kopfteil (12) und ein Dichtungsteil (13) aufweist, wobei das Kopfteil (12) und das Dichtungsteil (13) separat voneinander hergestellt und miteinander verbunden sind, wobei das Kopfteil (12) den Kupplungsabschnitt (5) wenigstens teilweise umfasst, wobei das Dichtungsteil (13) den Verbindungsabschnitt (4) wenigstens teilweise umfasst, wobei das Dichtungsteil (13) den Nutgrund (9) und die innere Nutwand (10) aufweist,
wobei die Kupplungsbuchse (1) bzw. der Buchsenkörper (2) einen Entkopplungsring (14) zum Entkoppeln des Kopfteils (12) von der Dichtungsnut (8) umfasst, wobei der Entkopplungsring (14) separat von dem Kopfteil (12) hergestellt ist, so dass der Entkopplungsring (14) mit dem Kopfteil (12) nicht integral verbunden ist, wobei der Entkopplungsring (14) mit wenigstens einem Teil einer axial einwärts gewandten Rückseite (15) wenigstens einen Abschnitt der äußeren Nutwand (11) bildet,
wobei das Dichtungsteil (13) wenigstens ein Winkelstellelement (20) zur Einstellung einer Winkelstellung in Umlaufrichtung zwischen dem Dichtungsteil (13) und dem Kopfteil (12) umfasst, wobei das Kopfteil (12) wenigstens ein zum Winkelstellelement (20) komplementäres Winkelstellelement (31) umfasst, wobei die Kupplungsbuchse (1) wenigstens 2 definierte Winkelstellungen umfasst.

2. Kupplungsbuchse (1) nach Anspruch 1, wobei die innere Nutwand (10) einstückig und vorzugsweise integral mit dem Dichtungsteil (13) bzw. dem Verbindungsabschnitt (4) verbunden ist.

3. Kupplungsbuchse (1) nacheinem der Ansprüche 1 oder 2, wobei der Entkopplungsring (14) separat von dem Dichtungsteil (13) hergestellt ist, so dass der Entkopplungsring (14) mit dem Dichtungsteil (13) nicht integral verbunden ist.

4. Kupplungsbuchse (1) nach einem der Ansprüche 1 bis 3, wobei - in einem Längsschnitt der Kupplungsbuchse (1) gesehen - ein Punkt einer axial einwärtigen Rückseite (15) des Entkopplungsrings (14) entlang eines Umlaufs wenigstens abschnittsweise von einer Senkrechten zur Mittelachse (M) abweicht.

5. Kupplungsbuchse (1) nach einem der Ansprüche 1 bis 4, wobei der Entkopplungsring (14) und/oder das Kopfteil (12) und/oder das Dichtungsteil (13) Kunststoff aufweist/aufweisen.

6. Kupplungsbuchse (1) nach einem der Ansprüche 1 bis 5, wobei der Entkopplungsring (14) in Umlaufrichtung in einem Formschluss - insbesondere über eine Nut-Feder-Verbindung - mit dem Dichtungsteil (13) steht.

7. Kupplungsbuchse (1) nach einem der Ansprüche 1 bis 6, wobei die Kupplungsbuchse (1) so ausgebildet ist, dass das Kopfteil (12) relativ zum Dichtungsteil (13) - bevor eine reversible oder irreversible Befestigung miteinander stattfindet - um die Mittelachse (M) drehbar ist, so dass eine Mehrzahl an möglichen Winkelstellungen zwischen dem Kopfteil (12) und dem Dichtungsteil (13) vorgesehen ist.

8. Kupplungsbuchse (1) nach einem der Ansprüche 1 bis 7, wobei der Entkopplungsring (14) eine Einführfläche (18) aufweist, deren Kontur (19) - in einem Längsschnitt von der Kupplungsbuchse (1) gesehen - wenigstens eine axiale und eine radiale Komponente umfasst.

9. Kupplungsbuchse (1) nach einem der Ansprüche 1 bis 8, wobei der Nutgrund (9) und/oder die innere Nutwand (10) und/oder die äußere Nutwand (11) in einem Längsschnitt der Kupplungsbuchse (1) gesehen wenigstens abschnittsweise eine gebogene Kontur aufweist/aufweisen.

10. Kupplungsbuchse (1) nach einem der Ansprüche 1 bis 9, wobei die Kupplungsbuchse (1) ein Anzeigeelement zur Anzeige einer Position des Kupplungssteckers innerhalb der Kupplungsbuchse (1) umfasst.

11. Kupplungsbuchse (1) nach einem der Ansprüche 1 bis 10, wobei die Kupplungsbuchse (1) so ausgebildet ist, dass das Kopfteil (12) und das Dichtungsteil (13) beim Zusammenführen in axialer Richtung einen zunehmenden Formschluss in Umlaufrichtung eingehen.

12. Kupplungsbuchse (1) nach einem der Ansprüche 1 bis 11, wobei der Rückhalter als Drahtbügel oder als Spritzgussteil ausgebildet ist.

13. Fluidleitung, umfassend eine Kupplungsbuchse (1) nach einem der Ansprüche 1 bis 12 und ein Rohr.

14. Verfahren zur Herstellung einer Kupplungsbuchse gemäß einem der Ansprüche 1 bis 12, wobei der Entkopplungsring (14) an dem Dichtungsteil (13) befestigt wird, wobei vorzugsweise danach das Kopfteil (12) an dem Dichtungsteil (13) befestigt wird.

## Claims

1. Coupling socket (1) comprising a socket body (2) and a retainer (3), wherein the socket body (2) comprises a connecting portion (4) and a coupling portion (5), wherein the retainer (3) is arranged in the coupling portion (5), wherein the coupling portion (5) is designed to receive inside itself a complementary coupling plug, wherein the connecting portion (4) is connectable or connected to a pipe or an assembly, wherein a fluid channel (6) of the socket body (2) fluidically connects the coupling portion (5) and the connecting portion (4) to each other, wherein a central axis (M) of the coupling portion (5) defines an axial, a radial, and a circumferential direction of the coupling portion (5),
wherein the coupling socket (1) comprises at least one sealing ring (7), wherein the coupling socket (1) has a sealing groove (8), wherein the sealing ring (7) is arranged in the sealing groove (8), wherein the sealing groove (8) comprises a groove base (9) and in the axial direction an inner groove wall (10) and an outer groove wall (11), wherein - viewed in a longitudinal section of the coupling socket (1) - the inner groove wall (10) and/or the outer groove wall (11) has at least one point or each have at least one point the complete circumference of which, viewed in the longitudinal section of the coupling socket (1), deviates at least in portions from a perpendicular to the central axis (M),
wherein the socket body (2) has a head part (12) and a sealing part (13), wherein the head part (12) and the sealing part (13) are manufactured separately from each other and are connected to each other, wherein the head part (12) at least partially comprises the coupling portion (5), wherein the sealing part (13) at least partially comprises the connecting portion (4), wherein the sealing part (13) has the groove base (9) and the inner groove wall (10),
wherein the coupling socket (1) or the socket body (2) comprises a decoupling ring (14) for decoupling the head part (12) from the sealing groove (8), wherein the decoupling ring (14) is manufactured separately from the head part (12) such that the decoupling ring (14) is not integrally connected to the head part (12), wherein the decoupling ring (14) forms with at least a part of an axially inwardly facing rear side (15) at least a portion of the outer groove wall (11),
wherein the sealing part (13) comprises at least one angular adjustment element (20) for adjusting an angular position in the circumferential direction between the sealing part (13) and the head part (12), wherein the head part (12) comprises at least one angular adjustment element (31) complementary to the angular adjustment element (20), wherein the coupling socket (1) comprises at least 2 defined angular positions.

2. Coupling socket (1) according to claim 1, wherein the inner groove wall (10) is connected in one piece and preferably integrally to the sealing part (13) or the connecting portion (4).

3. Coupling socket (1) according to either of claims 1 or 2, wherein the decoupling ring (14) is manufactured separately from the sealing part (13), such that the decoupling ring (14) is not integrally connected to the sealing part (13).

4. Coupling socket (1) according to any of claims 1 to 3, wherein - viewed in a longitudinal section of the coupling socket (1) - a point of an axially inward rear side (15) of the decoupling ring (14) deviates along a circumference at least in portions from a perpendicular to the central axis (M).

5. Coupling socket (1) according to any of claims 1 to 4, wherein the decoupling ring (14) and/or the head part (12) and/or the sealing part (13) comprises/comprise plastics material.

6. Coupling socket (1) according to any of claims 1 to 5, wherein the decoupling ring (14) is in the circumferential direction in a form fit - in particular via a tongue-and-groove connection - with the sealing part (13).

7. Coupling socket (1) according to any of claims 1 to 6, wherein the coupling socket (1) is designed such that the head part (12) is rotatable about the central axis (M) relative to the sealing part (13) - before they are reversibly or irreversibly fastened to each other- such that a plurality of possible angular positions between the head part (12) and the sealing part (13) are provided.

8. Coupling socket (1) according to any of claims 1 to 7, wherein the decoupling ring (14) has an insertion surface (18) the contour (19) of which - viewed in a longitudinal section of the coupling socket (1) - comprises at least an axial and a radial component.

9. Coupling socket (1) according to any of claims 1 to 8, wherein the groove base (9) and/or the inner groove wall (10) and/or the outer groove wall (11), viewed in a longitudinal section of the coupling socket (1), has/have at least in portions a curved contour.

10. Coupling socket (1) according to any of claims 1 to 9, wherein the coupling socket (1) comprises an indication element for indicating a position of the coupling plug within the coupling socket (1).

11. Coupling socket (1) according to any of claims 1 to 10, wherein the coupling socket (1) is designed such that the head part (12) and the sealing part (13) when brought together in the axial direction enter into an increasing form fit in the circumferential direction.

12. Coupling socket (1) according to any of claims 1 to 11, wherein the retainer is in the form of a wire clip or of an injection-molded part.

13. Fluid line comprising a coupling socket (1) according to any of claims 1 to 12 and a pipe.

14. Method for manufacturing a coupling socket according to any of claims 1 to 12, wherein the decoupling ring (14) is fastened to the sealing part (13), wherein the head part (12) is preferably then fastened to the sealing part (13).

## Revendications

1. Douille d'accouplement (1) comprenant un corps de douille (2) et un dispositif de retenue (3), le corps de douille (2) comprenant une section de liaison (4) et une section d'accouplement (5), le dispositif de retenue (3) étant disposé dans la section d'accouplement (5), la section d'accouplement (5) étant réalisée pour recevoir une fiche d'accouplement complémentaire en son sein, la section de liaison (4) pouvant être reliée ou étant reliée à un tuyau ou à un ensemble, un canal de fluide (6) du corps de douille (2) reliant fluidiquement l'une à l'autre la section d'accouplement (5) et la section de liaison (4), un axe central (M) de la section d'accouplement (5) définissant une direction axiale, une direction radiale et une direction circonférentielle de la section d'accouplement (5),
la douille d'accouplement (1) comprenant au moins une bague d'étanchéité (7), la douille d'accouplement (1) présentant une rainure d'étanchéité (8), la bague d'étanchéité (7) étant disposée dans la rainure d'étanchéité (8), la rainure d'étanchéité (8) comprenant un fond de rainure (9) et, dans la direction axiale, une paroi de rainure intérieure (10) ainsi qu'une paroi de rainure extérieure (11), la paroi de rainure intérieure (10) et/ou la paroi de rainure extérieure (11), vues dans une coupe longitudinale de la douille d'accouplement (1), présentant au moins un point ou présentant respectivement au moins un point, dont toute l'étendue, vue en coupe longitudinale de la douille d'accouplement (1), s'écarte au moins dans certaines sections d'une perpendiculaire à l'axe central (M),
le corps de douille (2) présentant une partie de tête (12) et une partie d'étanchéité (13), la partie de tête (12) et la partie d'étanchéité (13) étant fabriquées séparément l'une de l'autre et reliées l'une à l'autre, la partie de tête (12) comprenant au moins partiellement la section d'accouplement (5), la partie d'étanchéité (13) comprenant au moins partiellement la section de liaison (4), la partie d'étanchéité (13) présentant le fond de rainure (9) et la paroi de rainure intérieure (10),
la douille d'accouplement (1) ou le corps de douille (2) comprenant une bague de désolidarisation (14) pour la désolidarisation de la partie de tête (12) de la rainure d'étanchéité (8), la bague de désolidarisation (14) étant fabriquée séparément de la partie de tête (12), de sorte que la bague de désolidarisation (14) n'est pas reliée d'un seul tenant à la partie de tête (12), la bague de désolidarisation (14) formant, avec au moins une partie d'une face arrière (15) tournée axialement vers l'intérieur, au moins une section de la paroi de rainure extérieure (11),
la partie d'étanchéité (13) comprenant au moins un élément de réglage angulaire (20) pour le réglage d'une position angulaire dans la direction circonférentielle entre la partie d'étanchéité (13) et la partie de tête (12), la partie de tête (12) comprenant au moins un élément de réglage angulaire (31) complémentaire de l'élément de réglage angulaire (20), la douille d'accouplement (1) comprenant au moins deux positions angulaires définies.

2. Douille d'accouplement (1) selon la revendication 1, la paroi de rainure intérieure (10) étant reliée d'une seule pièce et de préférence d'un seul tenant à la partie d'étanchéité (13) ou à la section de liaison (4).

3. Douille d'accouplement (1) selon l'une des revendications 1 ou 2, la bague de désolidarisation (14) étant fabriquée séparément de la partie d'étanchéité (13), de sorte que la bague de désolidarisation (14) n'est pas reliée d'un seul tenant à la partie d'étanchéité (13).

4. Douille d'accouplement (1) selon l'une des revendications 1 à 3, un point d'une face arrière (15) axialement intérieure de la bague de désolidarisation (14) s'écartant, le long d'une étendue, au moins dans certaines sections, d'une perpendiculaire à l'axe central (M), vu en coupe longitudinale de la douille d'accouplement (1).

5. Douille d'accouplement (1) selon l'une des revendications 1 à 4, la bague de désolidarisation (14) et/ou la partie de tête (12) et/ou la partie d'étanchéité (13) présentant une matière synthétique.

6. Douille d'accouplement (1) selon l'une des revendications 1 à 5, la bague de désolidarisation (14) étant en prise par complémentarité de formes avec la partie d'étanchéité (13) dans la direction circonférentielle, en particulier par l'intermédiaire d'une liaison à rainure et languette.

7. Douille d'accouplement (1) selon l'une des revendications 1 à 6, la douille d'accouplement (1) étant réalisée de telle sorte que la partie de tête (12) peut tourner par rapport à la partie d'étanchéité (13) autour de l'axe central (M), avant qu'une fixation réversible ou irréversible ait lieu entre elles, de sorte qu'une pluralité de positions angulaires possibles sont prévues entre la partie de tête (12) et la partie d'étanchéité (13).

8. Douille d'accouplement (1) selon l'une des revendications 1 à 7, la bague de désolidarisation (14) présentant une surface d'introduction (18) dont le contour (19), vu en coupe longitudinale depuis la douille d'accouplement (1), comprend au moins une composante axiale et une composante radiale.

9. Douille d'accouplement (1) selon l'une des revendications 1 à 8, le fond de rainure (9) et/ou la paroi de rainure intérieure (10) et/ou la paroi de rainure extérieure (11) présentant, vus en coupe longitudinale de la douille d'accouplement (1), un contour incurvé au moins dans certaines sections.

10. Douille d'accouplement (1) selon l'une des revendications 1 à 9, la douille d'accouplement (1) comprenant un élément d'affichage pour l'affichage d'une position de la fiche d'accouplement à l'intérieur de la douille d'accouplement (1).

11. Douille d'accouplement (1) selon l'une des revendications 1 à 10, la douille d'accouplement (1) étant réalisée de telle sorte que la partie de tête (12) et la partie d'étanchéité (13), lorsqu'elles sont réunies dans la direction axiale, forment une prise par complémentarité de formes croissante dans la direction circonférentielle.

12. Douille d'accouplement (1) selon l'une des revendications 1 à 11, le dispositif de retenue étant réalisé sous la forme d'un étrier en fil métallique ou d'une pièce moulée par injection.

13. Conduite de fluide comprenant une douille d'accouplement (1) selon l'une des revendications 1 à 12 et un tuyau.

14. Procédé destiné à la fabrication d'une douille d'accouplement selon l'une des revendications 1 à 12, la bague de désolidarisation (14) étant fixée à la partie d'étanchéité (13), de préférence, la partie de tête (12) étant ensuite fixée à la partie d'étanchéité (13).
